# EUROPÄISCHE PATENTSCHRIFT

(11) **EP 1 306 414 B1**
(45) Veröffentlichungstag und Bekanntmachung des Hinweises auf die Patenterteilung: **24.11.2004**
(21) Anmeldenummer: 02017452.0
(22) Anmeldetag: 05.08.2002
(51) Int. Cl.: C09D 163/00, C09D 5/03

(54) **Pulverförmiger Beschichtungsstoff und funktionale Beschichtungen für hohe Dauergebrauchstemperaturen**
Powdery coating composition, functional coatings with a higher service life temperature
Composition de revêtement sous forme de poudre, revêtements fonctionnels ayant une température de longévité plus élevée

(30) Priorität: 25.10.2001 DE 10152829
(43) Veröffentlichungstag der Anmeldung: 02.05.2003
(73) Patentinhaber: BASF Coatings AG, 48165 Münster (DE)
(72) Erfinder: Hilger, Christopher, 48165 Münster (DE); Thomas, Dietmar, 40724 Hilden (DE); Blömer, Werner, 48607 Ochtrup (DE)
(74) Vertreter: Fitzner, Uwe, Dr.

(56) Entgegenhaltungen:
- US-A- 3 269 974
- US-A- 5 049 596
- US-A- 6 096 807

## Beschreibung

Die vorliegende Erfindung betrifft einen neuen pulverförmigen Beschichtungsstoff. Außerdem betrifft die vorliegende Erfindung neue funktionale Beschichtungen für hohe Dauergebrauchstemperaturen von Substraten, insbesondere Stahlrohren um und.

Pulverförmige Beschichtungsstoffe, die Beschichtungen mit einer Glasbergangstemperatur Tg von mehr als 120 °C liefern und die daher für die Anwendung bei hohen Dauergebrauchstemperaturen in Betracht kommen sind aus der Produktinformation von Dow Plastics, D.E.R. 6508, Februar 2000, bekannt.

Die pulverförmigen Beschichtungsstoffe enthalten das feste Epoxidharz D.E.R. 6508 mit einem Epoxidäquivalentgewicht von 380 bis 420 g/equ., einer ICI-Schmelzviskosität bei 150 °C von 2.800 bis 5.000 mPas und einem Erweichungspunkt von 95 bis 105 °C.

Die folgenden Rezepturen werden in der Produktinformation vorgeschlagen:

### 1. Formulation 1

- 77,6 Gew.% D.E.R. 6508,
- 2,4 Gew.% Aminhärter (Casamid ® 783 der Firma Thomas Swan),
- 5 Gew.% Titandioxid,
- 14 Gew.% Baruimsulfat und
- 1 Gew.% BYK® 360P (Polyacrylatadditiv der Firma Byk Chemie). Glasübergangstemperatur Tg der Beschichtung: 161 °C.

### 2. Formulation 2

- 46,6 Gew.% D.E.R. 6508,
- 31 Gew.% D.E.R. 624U (epoxymodifiziertes Novolakharz),
- 2,4 Gew.% Casamid ® 783,
- 5 Gew.% Titandioxid,
- 14 Gew.% Baruimsulfat und
- 1 Gew.% BYK® 360P.

Glasübergangstemperatur Tg der Beschichtung: 143 °C.

### 3. Formulation 3

- 50,4 Gew.% D.E.R. 6508,
- 29,2 Gew.% phenolischer Härter (D.E.H. 85 der Firma Dow),
- 0,4 Gew.% 2.Methylimidazol,
- 5 Gew.% Titandioxid,
- 14 Gew.% Baruimsulfat und
- 1 Gew.% BYK® 360P.
Glasübergangstemperatur Tg der Beschichtung: 126 °C.

Die bekannten Beschichtungen weisen demnach Glasübergangstemperaturen Tg auf, die sie für die Verwendung bei hohenDauergebrauchstemperaturen geeignet erscheinen lassen.

Ihre Flexibilität und ihr Gehalt an Füllstoffen und anorganischen Pigmenten lassen jedoch noch zu wünschen übrig. Eine hohe Flexibilität der Beschichtungen trägt aber erheblich zu ihrer mechanischen Stabilität bei, was insbesondere bei der Vorlegung von beschichteten Rohren, wie dies beispielsweise bei dem Bau von Pipelines erfolgt, von großer Bedeutung ist. Und ein hoher Gehalt an Füllstoffen und anorganischen Pigmenten erhöht die Abriebfestigkeit und die Kratzfestigkeit der Beschichtungen und senkt die Kosten für die Einsatzstoffe.

Aufgabe der vorliegenden Erfindung ist es,einen neuen pulverförmigen Beschichtungsstoff bereitzustellen, der die Nachteile des Standes der Technik nicht mehr länger aufweist, sondern der funktionale Beschichtungen für Substrate für hohe Dauergebrauchstemperaturen liefert, die flexibel, abriebfest, kratzfest, wasserfest und von hoher Korrosionsschutzwirkung sind und einen höheren Gehalt an anorganischen Pigmenten und Füllstoffen verkraften, ohne dass dadurch wichtige anwendungstechnische Eigenschaften beeinträchtigt werden. Im Gegenteil, der höhere Gehalt an anorganischen Pigmenten und Füllstoffen soll sich positiv auf das Eigenschaftsprofil der neuen Beschichtungen auswirken.

Demgemäß wurde der neue pulverförmige Beschichtungsstoff gefunden, enthaltend, bezogen auf den Beschichtungsstoff,
(A) 40 bis 65 Gew.% mindestens eines bezüglich der thermischen Vernetzung über die Epoxidgruppen multifunktionellen, festen Epoxidharzes mit einem Epoxidäquivalentgewicht von 380 bis 420 g/equ., einer ICI-Schmelzviskosität bei 150 °C von 2.800 bis 5.000 mPas und einem Erweichungspunkt von 95 bis 105 °C,
(B) 15 bis 35 Gew.% mindestens eines festen, linearen Epoxidharzes auf der Basis von Bisphenol A, AD und/oder F mit einer Funktionalität bezüglich thermischen Vernetzung über die Epoxidgruppen von maximal 2,
(C) 15 bis 30 Gew.% eines anorganischen Füllstoffs und
(D) 1 bis 10 Gew.% mindestens eines Härters.

Im folgenden wird der neue pulverförmige Beschichtungsstoff als »erfindungsgemäßer Beschichtungsstoff« bezeichnet.

Außerdem wurden die neuen Beschichtungen für Substrate für hohe Dauergebrauchstemperaturen gefunden, die durch die thermische Vernetzung des erfindungsgemäßen Beschichtungsstoffs herstellbar sind und im folgenden als erfindungsgemäße Beschichtungen« bezeichnet werden.

Im Hinblick auf den Stand der Technik war es überraschend und für den Fachmann nicht vorhersehbar, dass die Aufgabe, die der vorliegenden Erfindung zugrundelag, mit Hilfe des erfindungsgemäßen Beschichtungsstoffs und der erfindungsgemäßen Beschichtungen gelöst werden konnte. Insbesondere war es überraschend, dass durch die Kombination des multifunktionellen, festen Epoxidharzes (A) mit dem maximal difunktionellen, festen Epoxidharz (B) der Anteil an anorganischen Füllstoffen (C) und anorganischen Pigmenten (D) signifikant erhöht werden konnte, ohne dass die anwendungstechnischen Eigenschaften der erfindungsgemäßen Beschichtungen dadurch in Mitleidenschaft gezogen wurden. Im Gegenteil wiesen die erfindungsgemäßen Beschichtungen eine hohe Glasübergangstemperatur Tg und eine hohe Flexibilität auf und waren hervorragend für die Verwendung bei hohen Dauergebrauchstemperaturen geeignet. Aufgrund ihres sehr guten anwendungstechnischen Eigenschaftsprofils waren die erfindungsgemäßen Beschichtungen insbesondere für die Beschichtung von Stahlrohren für Pipelines, die der Förderung von heißen Fluiden dienen, geeignet.

Der erste wesentliche Bestandteil des erfindungsgemäßen Beschichtungsstoffs ist mindestens ein festes Epoxidharz (A), das bezüglich der thermischen Vernetzung über die Epoxidgruppen multifunktionell ist. »Multifunktionell« bedeutet, dass das Epoxidharz (A) einer Funktionalität von >2 hat. Das Epoxidharz (A) hat ein Epoxidäquivalentgewicht von 380 bis 420 g/equ., eine ICI-Schmelzviskosität bei 150 °C von 2.800 bis 5.000 mPas und einen Erweichungspunkt von 95 bis 105 °C. In dem erfindungsgemäßen Beschichtungsstoff ist es in einer Menge von 40 bis 65, bevorzugt 40 bis 60 und insbesondere 42 bis 55 Gew.%, jeweils bezogen auf den erfindungsgemäßen Beschichtungsstoff, enthalten.

Die Epoxidharze (A) sind übliche und bekannte Verbindungen und werden beispielsweise unter der Marke D.E.R. ® 6508 von der Firma Dow Plastics vertrieben.

Der zweite wesentliche Bestandteil des erfindungsgemäßen Beschichtungsstoffs ist mindestens ein festes, lineares Epoxidharz (B) auf der Basis von Bisphenol A, AD und/oder F, insbesondere auf der Basis von Bisphenol A. Bezüglich der thermischen Vernetzung über die Epoxidgruppen haben die Epoxidharze (B) eine Funktionalität von maximal 2. In dem erfindungsgemäßen Beschichtungsstoff sind sie in einer Menge von 15 bis 35, bevorzugt 16 bis 34 und insbesondere 18 bis 32 Gew.%, jeweils bezogen auf den erfindungsgemäßen Beschichtungsstoff, enthalten.

Vorzugsweise werden Oligo- oder Polyglycidylether von den genannten Bisphenolen, insbesondere von Bisphenol A eingesetzt. Bekanntermaßen können diese Epoxidharze (B) durch Umsetzung von Epichlorhydrin mit den Bisphenolen hergestellt werden. Beispiele geeigneter Epoxidharze (B) werden beispielsweise in der französischen Patentanmeldung FR 2 394 590 A, Seite 4, Zeilen 20 bis 36, in dem japanischen Patent H5-63307 B 2 oder in Römpp Lexikon Lacke und Druckfarben, Georg Thieme Verlag, Stuttgart, New York, 1998, »Epoxidharze«, Seiten 196 und 197, beschrieben.

Der dritte wesentliche Bestandteil des erfindungsgemäßen Beschichtungsstoffs ist mindestens ein anorganischer Füllstoff (C). In dem erfindungsgemäßen Beschichtungsstoff wird er in einer Menge von 15 bis 30, vorzugsweise 15 bis 28 und insbesondere 15 bis 25 Gew.%, jeweils bezogen auf den erfindungsgemäßen Beschichtungsstoff, eingesetzt.

Beispiele geeigneter anorganischer Füllstoffe (C) sind Kreide, Calciumsulfate, Bariumsulfat, Silikate wie Talkum, Glimmer oder Kaolin, kristalline Kieselsäuren, wie sie beispielsweise aus dem europäischen Patent EP 0 693 003 B 1, Seite 3, Zeilen 26 bis 39, bekannt sind, Oxide wie Aluminiumhydroxid oder Magnesiumhydroxid und Nanopartikel auf der Basis von Siliziumdioxid, Aluminiumoxid, Aluminiumoxidhydrat, oder Zirkoniumoxid. Ergänzend wird auf Römpp Lexikon Lacke und Druckfarben, Georg Thieme Verlag, 1998, Seiten 250 ff., »Füllstoffe«, verwiesen. Vorzugsweise wird Bariumsulfat verwendet.

Der erfindungsgemäße Beschichtungsstoff enthält mindestens einen Härter (D) in einer Menge von 1 bis 10, vorzugsweise 1,5 bis 5 und insbesondere 2 bis 4 Gew.%, jeweils bezogen auf den erfindungsgemäßen Beschichtungsstoff.

Bei dem Härter (D) kann es sich um übliche und bekannte phenolische Härter (D), wie sie beispielsweise aus dem amerikanischen Patent US 6,096,807 A, Spalte 2, Zeilen 21 bis 45, oder dem europäischen Patent EP 0 693 003 B 1, Seite 2, Zeile 59, bis Seite 3, Zeile 10, bekannt sind, handeln.

Es können aber auch übliche und bekannte aminische Härter (D) eingesetzt werden, wie sie beispielsweise aus dem Lehrbuch von Johan Bieleman, »Lackadditive«, Wiley-VCH, Weinheim, New York, 1998, »7.2.4.2 Epoxy-Amin-Systeme«, Seiten 265 bis 267, bekannt sind.

Der erfindungsgemäße Beschichtungsstoff kann des weiteren mindestens ein anorganisches Pigment (E) vorzugsweise in einer Menge von 0,5 bis 10, bevorzugt 1 bis 6 und insbesondere 1,5 bis 5 Gew.%, jeweils bezogen auf den erfindungsgemäßen Beschichtungsstoff, enthalten.

Beispiele für geeignete anorganische Pigmente (E) sind Weißpigmente, wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Vorzugsweise wird Titandioxid, ggf. i. V. m. Eisenoxidpigmenten, verwendet.

Darüber hinaus kann der erfindungsgemäße Beschichtungsstoff mindestens einen pulverlacktypischen Zusatzstoff (F) vorzugsweise in einer Menge von 0,01 bis 5 Gew.%, bezogen auf den erfindungsgemäßen Beschichtungsstoff, enthalten.

Beispiele geeigneter pulverlacktypischer Zusatzstoffe (F) sind Katalysatoren für die phenolische Härtung, wie sie beispielsweise in dem europäischen Patent EP 0 693 003 B 1, Seite 3, Zeilen 11 bis 25, beschrieben werden, und Katalysatoren für die aminische Härtung, wie sie beispielsweise aus dem Lehrbuch von Johan Bieleman, »Lackadditive«, Wiley-VCH, Weinheim, New York, 1998, »7.2.4.2 Epoxy-Amin-Systeme«, Seiten 265 bis 267, bekannt sind. Die Katalysatoren (F) können bereits in den betreffenden handelsüblichen Härtern (D) enthalten sein.

Weitere Beispiele geeigneter Zusatzstoffe (F) sind Verlaufsmittel, wie Polyacrylate, Slipadditive, Rieselhilfen und Entlüftunsmittel, wie Benzoin.

Die Herstellung der erfindungsgemäßen Beschichtungsstoffe erfolgt nach bekannten Methoden (vgl. z.B. die Produkt-Information der Firma BASF Lacke + Farben AG, »Pulverlacke«, 1990, und die Firmenschrift der BASF Coatings AG »Pulverlacke für industrielle Anwendungen«, Januar 2000, Seiten 26 und 27) durch Homogenisieren und Dispergieren, beispielsweise mittels eines Extruders, Schneckenkneters u.ä.. Nach Herstellung der Pulverlacke werden diese durch Vermahlen und ggf. durch Sichten und Sieben auf die gewünschte Teilchengrößenverteilung eingestellt. Für das Vermahlen kann eine Mahlhilfe, wie Aerosil, verwendet werden. Die Teilchengröße der erfindungsgemäßen Beschichtungsstoffe kann breit variieren und richtet sich in erster Linie nach dem Anwendungszweck. Vorzugsweise liegen die Teilchengrößen zwischen 10 und 500, bevorzugt 20 und 400, besonders bevorzugt 25 und 300 und insbesondere 30 bis 200 µm.

Der erfindungsgemäße Beschichtungsstoff ist hervorragend für die Herstellung der erfindungsgemäßen Beschichtungen mittels der thermischen Vernetzung geeignet.

Die Applikation der erfindungsgemäßen Beschichtungsstoffe auf die Substrate weist keine methodischen Besonderheiten auf, sondern erfolgt mit Hilfe der üblichen und bekannten Vorrichtungen und Verfahren, wie sie beispielsweise in der Produkt-Information der Firma BASF Lacke + Farben AG, »Pulverlacke«, 1990, der Firmenschrift der BASF Coatings AG »Pulverlacke für industrielle Anwendungen«, Januar 2000, Seiten 26 und 27, oder dem amerikanischen Patent US 6,096,807 A, Spalte 3, Zeilen 44 bis 60, beschrieben werden.

Auch die thermische Härtung des applizierten erfindungsgemäßen Beschichtungsstoffs weist keine methodischen Besonderheiten auf, sondern erfolgt beispielsweise mit Hilfe von Gasöfen. Vorzugsweise werden aber die Substrate vor der Applikation des erfindungsgemäßen Beschichtungsstoffs auf Temperaturen erhitzt, bei denen der applizierte erfindungsgemäße Beschichtungsstoff aufschmilzt und vernetzt. Werden Substrate aus Metallen, insbesondere aus Eisen, verwendet, kann auch die induktive Beheizung angewandt werden. Vorzugsweise werden Vernetzungstemperaturen von 150 bis 260, bevorzugt 160 bis 240 und insbesondere 180 bis 240 °C angewandt (vgl. auch das amerikanische Patent US 6,096,807 A, Spalte 3, Zeilen 44 bis 60).

Aufgrund ihrer vorteilhaften anwendungstechnischen Eigenschaften können die erfindungsgemäßen Beschichtungen zahlreichen Anwendungszwecken zugeführt werden, wie sie beispielsweise in »Coatings Partner - The magazine of BASF Coatings - Powder Coatings Special«, 1/2000, beschrieben werden.

Besonders bevorzugt werden die erfindungsgemäßen Beschichtungen zur Beschichtung von Stahlrohren, insbesondere Stahlrohren zur Herstellung von Pipelines, eingesetzt.

Die erfindungsgemäßen Beschichtungen weisen vorzugsweise Glasübergangstemperaturen Tg von 130 bis 150, bevorzugt 130 bis 145 und insbesondere 130 bis 140 °C auf. Dadurch können sie ohne weiteres Dauergebrauchstemperaturen von 80 bis 130 °C ertragen, ohne dass eine Beeinträchtigung ihrer hohen mechanischen Stabilität, Flexibilität, Wasserstabilität, Haftfestigkeit und Korrosionsschutzwirkung eintritt.

Die erfindungsgemäßen Beschichtungen können einlagig sein. Vorzugsweise sind sie 250 bis 1.000, bevorzugt 300 bis 900 und insbesondere 350 bis 900 µm dick.

Die erfindungsgemäßen Beschichtungen können aber auch die Grundierung einer mehrlagigen Beschichtung bilden, die beispielsweise aus einer Grundierung und mindestens einer Schicht, vorzugsweise mindestens zwei Schichten, ausgewählt aus der Gruppe, bestehend aus haftvermittelnden Schichten, Polyolefinschichten, isolierenden Polyurethanschichten und Schichten, herstellbar aus üblichen und bekannten, sonstigen pulverförmigen Beschichtungsstoffen auf der Basis von Epoxidharzen, besteht. Beschichtungen dieser Art werden vorzugsweise für die Beschichtung von Pipelines verwendet. Beispielsweise kann die erfindungsgemäße Beschichtung aus der Grundierung, einer haftvermittelnden Schicht und einer Polyolefinschicht bestehen, wie es aus dem europäischen Patent EP 0 693 003 B 1, insbesondere Seite 4, Zeilen 21 bis 48, oder der internationalen Patentanmeldung WO 32/03234 A, Seite 6, Zeile 21, bis Seite 11, Zeile 30, und Seite 11, Zeile 33, bis Seite 21, Zeile 6, i. V. m. der Figur 1, bekannt ist.

Die mit einer erfindungsgemäßen Beschichtung versehenen Stahlrohre, insbesondere die erfindungsgemäßen Pipelines, widerstehen ohne weiteres hohe Dauergebrauchstemperaturen, ohne dass unter Praxisbedingungen im Boden eine Beeinträchtigung ihrer hohen mechanischen Stabilität, Flexibilität, Wasserstabilität, Haftfestigkeit und Korrosionsschutzwirkung eintritt. Die erfindungsgemäßen Pipelines haben daher eine besonders hohe Lebensdauer.

### Beispiele

### Beispiele 1 bis 4

### Die Herstellung der erfindungsgemäßen Beschichtungsstoffe 1 bis 4 und der erfindungsgemäßen Beschichtungen 1 bis 4

Für die Herstellung der erfindungsgemäßen Beschichtungsstoffe 1 bis 4 wurden ihre jeweiligen Bestandteile (A), (B), (C), (D), (E) und (F) in den in der Tabelle 1 angegebenen Mengen vermischt, extrudiert, vermahlen und gesichtet, sodass eine Teilchengröße und eine Teilchengrößenverteilung, wie sie üblicherweise bei Pulverlacken für die Beschichtung von Stahlrohren angewandt weredn, resultieren.

**Tabelle 1:**

| **Zusammensetzung der erfindungsgemäßen Beschichtungsstoffe 1 bis 4** | | | | |
|---|---|---|---|---|
| **Bestandteil** | **Beispiele:** | | | |
| | **1** | **2** | **3** | **4** |
| DOW D.E.R. 6508 ^{a)} | 53,16 | 48,3 | 43,4 | 43,4 |
| | | | | |
| Epikote ® 1007 ^{b)} | 20 | 25 | 30 | 30 |
| | | | | |
| Grilonit ® H 88071 ^{c)} | 3,04 | 2,9 | 2,8 | - |
| | | | | |
| Epikure ® 143FF ^{d)} | - | - | - | 2,8 |
| | | | | |
| Blanc Fixe ® N ^{e)} | 20 | 20 | 20 | 20 |
| | | | | |
| Titan Rutil R 900 ^{f)} | 2 | 2 | 2 | 2 |
| | | | | |
| Bayferrox ® 920 ^{g)} | 1 | 1 | 1 | 1 |
| | | | | |
| Byk ® 360 P ^{h)} | 0,8 | 0,8 | 0,8 | 0,8 |
| | | | | |
| Dichte (g/cm³)ⁱ⁾ | 1,46 | 1,46 | 1,46 | 1,46 |

| | | | | |
|---|---|---|---|---|
| a) multifunktionelles, festes Epoxidharz; Epoxidäquivalentgewicht: 380 bis 420 g/equ.; Schmelzviskosität bei 150 °C: 2.800 bis 5.000 mPas; Erweichungspunkt von 95 bis 105 °C; | | | | |
| b) handelsübliches, festes, lineares Epoxidharz auf der Basis von Bisphenol A der Firma Shell; | | | | |
| c) handelsüblicher aminischer Härter der Firma Grilon; | | | | |
| d) handelsüblicher aminischer Härter der Firma Shell; | | | | |
| e) Füllstoff Bariumsulfat; | | | | |
| f) handelsübliches Titandioxid-Pigment; | | | | |
| g) handelsübliches Eisenoxidpigment der Firma Bayer AG; | | | | |
| h) handelsüblicher Zusatzstoff auf Basis von Polyacrylat der Firma Byk Chemie; | | | | |
| i) Dichtemessgerät AccuPyk 1300 | | | | |

Die erfindungsgemäße Beschichtung 1 wurde aus dem Beschichtungsstoff 1,die erfindungsgemäße Beschichtung 2 aus dem Beschichtungsstoff 2, die erfindungsgemäße Beschichtung 3 aus dem Beschichtungsstoff 3 und die erfindungsgemäße Beschichtung 4 aus dem Beschichtungsstoff 4 hergestellt.

Die erfindungsgemäßen Beschichtungsstoffe 1 bis 4 waren hervorragend für die Beschichtung von Stahlrohren für Pipelines geeignet. Dazu wurden Rohre vom Durchmesser 300 mm mit Wandstärke von 12 mm in einer Strahlanlage auf Sauberkeit SA 3 gestrahlt Die Rauhtiefe lag bei 50 µm. Die Rohre wurden anschließend mit einer Induktionsspule auf 230 °C erhitzt. Die Beschichtungsstoffe 1 bis 4 wurden elektrostatisch mit einer Schichtdicke von etwa 500 µm appliziert und ausgehärtet. Weder bei der Applikation noch bei der Härtung traten irgendwelche Probleme auf.

Die Gelzeit, die Erichsentiefung, die Biegung an der Tischkante und im Biegeschuh, der CD-Test, die Wasseraufnahme, der Impact-Test sowie der Glanz und der Verlauf wurden anhand von geeigneten beschichteten Prüftafeln bestimmt. Die Glasübergangstemperatur Tg wurde mit Hilfe der Differentialthermoanalyse gemessen. Die Ergebnisse sind in der Tabelle 2 zusammengestellt.

**Tabelle 2:**

| **die wesentlichen anwendungstechnischen Eigenschaften der erfindungsgemäßen Beschichtungen 1 bis 4** | | | | |
|---|---|---|---|---|
| **Eigenschaft** | **Beispiel:** | | | |
| | **1** | **2** | **3** | **4** |
| Gelzeit (180 °C) (s) ^{a)} | 52 | 53 | 52 | 43 |
| | | | | |
| Erichsentiefung und Biegung auf Tischkante ^{b)}auf 0,5 mm Stahlblech; | | | | |
| Härtungsbedingungen: | | | | |
| 3 min/160 °C | 0,2 o | 0,2 o | 0,2 o | 0,2 o |
| 6 min/160 °C | 0,7 o | 0,7o | 0,7 o | 0,7 o |
| 9 min/160 °C | 4,8 x | 4,8 x | 5,7 x | 6,0 x |
| 12 min/160 °C | 6,5 x | 6,5 x | 7,0 x | 7,5 + |
| 15 min/160 °C | 7,5 + | 7,5 + | 7,7 + | 6,9 + |
| | | | | |
| Glasübergangstemperatur | | | | |
| Tg (°C) | 139,34 | 137,18 | 133,53 | 133,21 |
| | | | | |
| Schichtdicke (µm) bis 86 | 70 bis 82 | 76 bis 86 | 77 bis 95 | 75 |
| Glanz 60°(Einheiten) | 100 | 100 | 100 | 98 |
| Verlauf (Härtungsbedingungen: 10 min/180 °C | mäßig | mäßig | mäßig | mäßig |
| | 3 | 3 | 3 | 3 |
| | | | | |
| Biegung an 10 mm Tafeln ^{c)} Schichtdicke (µm) | 360 | 420 | 430 | 500 |
| Biegung im Biegeschuh (4%) | + | + | + | + |
| Schaumnote | 2 | 3 | 2-3 | 3 |
| | | | | |
| CD-Test an 10 mm Tafeln ^{c)}(-1,5 Volt gegen Kalomel-Elektrode) | | | | |
| Unterwanderung (mm) nach: | | | | |
| 28 Tage/22 °C | 4 | 3,5-4 | 3,5-4 | 4 |
| 2 Tage/65°C | 2,5 | 2,5 | 2 | 2-3 |
| 14 Tage/65 °C | 4 | 3 | 4 | 3,5-4 |
| 2 Tage/140 °C Sandbad | 2-3 | 2 | 2-2,5 | 2-2,5 |
| | | | | |
| Wasserlagerung von 10 mm Tafeln ^{c)}(Schichtdicke 400 bis 500 µm) bei 80 °C; | | | | |
| Wasseraufnahme (Gew.%) nach: | | | | |
| 240 Stunden | 1,71 | 1,76 | 3,87 | 2,30 |
| 504 Stunden | 2,22 | 2,45 | 4,07 | 2,69 |
| 744 Stunden | 1,9 | 1,84 | 4,2 | 2,85 |
| 1.008 Stunden | 2,02 | 2,15 | 5,48 | 3,79 |
| | | | | |
| lmpact ^{d)} auf 10 mm Tafeln ^{c)} | | | | |
| Punkt 1: Schichtdicke (µm) | 440 | 520 | 430 | 520 |
| kg x cm | 50 | 50 | 50 | 50 |
| Punk 2: Schichtdicke (µm) | 410 | 460 | 450 | 510 |
| kg x cm | 60 | 60 | 60 | 60 |
| Punkt 3: Schichtdicke (µm) | 370 | 450 | 340 | 420 |
| kg x cm | 70 | 70 | 65 | 65 |
| Punkt 4: Schichtdicke (µm) | 380 | 410 | 410 | 420 |
| kg x cm | 80 | 75 | 70 | (70) |
| Punkt 5: Schichtdicke (µm) | 380 | 440 | 370 | 440 |
| kg x cm | 80 | 75 | 75 | 65 |
| Punkt 6: Schichtdicke (µm) | 400 | 420 | 400 | 450 |
| kg x cm | (90) | 80 | 80 | (65) |
| Punkt 7: Schichtdicke (µm) | 450 | 490 | 430 | 540 |
| kg x cm | 70 | (70) | (80) | 60 |
| Punkt 8: Schichtdicke (µm) | 470 | 500 | 450 | 540 |
| kg x cm | (75) | 60 | (65) | (60) |

| | | | | |
|---|---|---|---|---|
| a) bestimmt mit Gelzeitgerät Coesfeld; | | | | |
| b) o = gerissen; x = Haarrisse; + = in Ordnung; | | | | |
| c) zur Herstellung wurden die Stahltafeln mit einem Wheelabrator GH 40 auf eine Sauberkeit von SA 2,5 gestrahlt; die Stahltafeln wurden bei 240 °C vorgetempert, beschichtet, während 120 Sekunden bei 240 °C nachgebrannt und sofort in Wasser abgekühlt; | | | | |
| d) impact-Werte ohne () = in Ordnung, es findet keine Zerstörung der Beschichtung statt; Impact-Werte mit () = nicht in Ordnung, es tritt eine Zerstörung der Beschichtung ein; können kg x cm = Produkt aus dem Gewicht des Fallkörpers (16 mm durchmessende Kugel; Gewicht 1 kg) und der Fallhöhe | | | | |

Die der Tabelle 2 zusammengestellten Ergebnisse untermauern, dass die erfindungsgemäßen Beschichtungen 1 bis 4 zusätzlich zu der hohen Glasübergangstemperatur Tg eine hohe Flexibilität, mechanische Stabilität und Korrosionsfestigkeit und nur eine geringe Wasseraufnahme aufwiesen.

## Patentansprüche

1. Pulverförmiger Beschichtungsstoff, enthaltend, bezogen auf den Beschichtungsstoff,
(A) 40 bis 65 Gew.% mindestens eines bezüglich der thermischen Vernetzung über die Epoxidgruppen multifunktionellen, festen Epoxidharzes mit einem Epoxidäquivalentgewicht von 380 bis 420 g/equ., einer ICI-Schmelzviskosität bei 150 °C von 2.800 bis 5.000 mPas und einem Erweichungspunkt von 95 bis 105 °C,
(B) 20 bis 30 Gew.% mindestens eines festen, linearen Epoxidharzes auf der Basis von Bisphenol A, AD und/oder F mit einer Funktionalität bezüglich thermischen Vernetzung über die Epoxidgruppen von maximal 2,
(C) 15 bis 30 Gew.% eines anorganischen Füllstoffs und
(D) 1 bis 10 Gew.% mindestens eines Härters
enthält.

2. Beschichtungsstoff nach Anspruch 1, **dadurch gekennzeichnet, dass** er, bezogen auf den Beschichtungsstoff,
(E) 0,5 bis 10 Gew.% mindestens eines anorganischen Pigments
enthält.

3. Beschichtungsstoff nach Anspruch 1 oder 2, **dadurch gekennzeichnet, dass** er, bezogen auf den Beschichtungsstoff,
(F) 0,01 bis 2 Gew.% mindestens eines pulverlacktypischen Zusatzstoffs
enthält.

4. Funktionale Beschichtung für hohe Dauergebrauchstemperaturen von Substraten, herstellbar aus einem pulverförmigen Beschichtungsstoff gemäß einem der Ansprüche 1 bis 3 durch thermische Vernetzung.

5. Funktionale Beschichtung nach Anspruch 4, **dadurch gekennzeichnet, dass** ihre Glasübergangstemperatur Tg bei 130 bis 150 °C liegt.

6. Funktionale Beschichtung nach Anspruch 5, **dadurch gekennzeichnet, dass** die Dauergebrauchstemperaturen bei 80 bis 130 °C liegen.

7. Funktionale Beschichtung nach einem der Ansprüche 4 bis 6, **dadurch gekennzeichnet, dass** die funktionalen Beschichtung einlagig ist.

8. Funktionale Beschichtung nach Anspruch 7, **dadurch gekennzeichnet, dass** sie 250 bis 1.000 um dick ist.

9. Funktionale Beschichtung nach einem der Ansprüche 4 bis 6, **dadurch gekennzeichnet, dass** sie die Grundierung einer mehrlagigen Beschichtung bildet.

10. Funktionale Beschichtung nach Anspruch 9, **dadurch gekennzeichnet, dass** die mehrlagige Beschichtung aus der Grundierung und mindestens einer Schicht, ausgewählt aus der Gruppe, bestehend aus haftvermittelnden Schichten, Polyolefinschichten, isolierenden Polyurethanschichten und Schichten, herstellbar aus sonstigen pulverförmigen Beschichtungsstoffen auf der Basis von Epoxidharzen, besteht.

11. Funktionale Beschichtung nach Anspruch 10, **dadurch gekennzeichnet, dass** die mehrlagige Beschichtung aus der Grundierung, einer haftvermittelnden Schicht und einer Polyolefinschicht besteht.

12. Funktionale Beschichtung nach einem der Ansprüche 4 bis 11, **dadurch gekennzeichnet, dass** die Substrate Stahlrohre sind.

## Claims

1. Powder coating material comprising, based on the coating material,
(A) from 40 to 65% by weight of at least one solid epoxy resin which is polyfunctional in respect of thermal crosslinking by way of the epoxide groups and has an epoxide equivalent weight of from 380 to 420 g/equ., an ICI melt viscosity at 150°C of from 2800 to 5000 mPas, and a softening point of from 95 to 105°C,
(B) from 20 to 35% by weight of at least one solid, linear epoxy resin based on bisphenol A, AD and/or F, having a functionality in respect of thermal crosslinking by way of the epoxide groups of not more than 2,
(C) from 15 to 30% by weight of an inorganic filler and
(D) from 1 to 10% by weight of at least one hardener.

2. Coating material according to Claim 1, **characterized in that**, based on the coating material, it contains
(E) from 0.5 to 10% by weight of at least one inorganic pigment.

3. Coating material according to Claim 1 or 2, **characterized in that**, based on the coating material, it contains
(F) from 0.01 to 2% by weight of at least one typical powder coatings additive.

4. Functional coating for high long-term service temperatures on substrates, producible from a powder coating material according to any of Claims 1 to 3 by thermal crosslinking.

5. Functional coating according to Claim 4, **characterized in that** its glass transition temperature Tg is from 130 to 150°C.

6. Functional coating according to Claim 5, **characterized in that** the long-term service temperatures are from 80 to 130°C.

7. Functional coating according to any of Claims 4 to 6, **characterized in that** the functional coating is single-ply.

8. Functional coating according to Claim 7, **characterized in that** it is from 250 to 1000 µm thick.

9. Functional coating according to any of Claims 4 to 6, **characterized in that** it forms the primer of a multi-ply coating system.

10. Functional coating according to Claim 9, **characterized in that** the multi-ply coating system is composed of the primer and at least one coat selected from the group consisting of adhesion promoter coats, polyolefin coats, insulating polyurethane coats, and coats producible from other powder coating materials based on epoxy resins.

11. Functional coating according to Claim 10, **characterized in that** the multi-ply coating is composed of the primer, an adhesion promoter coat, and a polyolefin coat.

12. Functional coating according to any of Claims 4 to 11, **characterized in that** the substrates are steel pipes.

## Revendications

1. Matière de revêtement pulvérulente contenant, par rapport à la matière de revêtement,
(A) de 40 à 65 % en poids d'au moins une résine époxy solide multifonctionnelle en ce qui concerne la réticulation thermique par les groupes époxy, ayant un poids d'équivalent époxy de 380 à 420 g/équ., une viscosité à l'état fondu ICI à 150°C de 2800 à 5000 mPa.s et un point de ramollissement de 95 à 105°C,
(B) de 20 à 30 % en poids d'au moins une résine époxy linéaire solide à base de bisphénol A, AD et/ou F, ayant une fonctionnalité en ce qui concerne la réticulation thermique par les groupes époxy de 2 au maximum,
(C) de 15 à 30 % en poids d'une charge minérale et
(D) de 1 à 10 % en poids d'au moins un durcisseur.

2. Matière de revêtement selon la revendication 1, **caractérisée en ce qu'**elle contient, par rapport à la matière de revêtement,
(E) de 0,5 à 10 % en poids d'au moins un pigment minéral.

3. Matière de revêtement selon la revendication 1 ou 2, **caractérisée en ce qu'**elle contient, par rapport à la matière de revêtement,
(F) de 0,01 à 2 % en poids d'au moins un additif caractéristique de peintures en poudre.

4. Revêtement fonctionnel pour hautes températures d'utilisation pendant de longues durées de subjectiles, pouvant être obtenu à partir d'une matière de revêtement pulvérulente selon l'une quelconque des revendications 1 à 3, par réticulation thermique.

5. Revêtement fonctionnel selon la revendication 4, **caractérisé en ce que** sa température de transition vitreuse Tg va de 130 à 150°C.

6. Revêtement fonctionnel selon la revendication 5, **caractérisé en ce que** les températures d'utilisation pendant de longues durées vont de 80 à 130°C.

7. Revêtement fonctionnel selon l'une quelconque des revendications 4 à 6, **caractérisé en ce que** le revêtement fonctionnel est monocouche.

8. Revêtement fonctionnel selon la revendication 7, **caractérisé en ce qu'**il a une épaisseur de 250 à 1000 µm.

9. Revêtement fonctionnel selon l'une quelconque des revendications 4 à 6, **caractérisé en ce qu'**il constitue le primaire d'un revêtement multicouche.

10. Revêtement fonctionnel selon la revendication 9, **caractérisé en ce que** le revêtement multicouche consiste en le primaire et en au moins une couche choisie dans le groupe constitué par des couches promouvant l'adhérence, des couches de polyoléfine, des couches de polyuréthanne isolantes et des couches pouvant être produites à partir d'autres matières de revêtement pulvérulentes à base de résines époxy.

11. Revêtement fonctionnel selon la revendication 10, **caractérisé en ce que** le revêtement multicouche consiste en le primaire, en une couche promouvant l'adhérence et en une couche de polyoléfine.

12. Revêtement fonctionnel selon l'une quelconque des revendications 4 à 11, **caractérisé en ce que** les subjectiles sont des tubes en acier.
